# EUROPÄISCHE PATENTANMELDUNG

(11) **EP 4 749 257 A1**
(43) Veröffentlichungstag der Anmeldung: **27.05.2026**
(21) Anmeldenummer: 24214707.2
(22) Anmeldetag: 22.11.2024
(51) Int. Cl.: G01M 3/00, F21V 31/03, G01M 3/32, F21V 23/04

(54) **SYSTEM ZUR ÜBERWACHUNG DER DICHTIGKEIT EINER AUSSENLEUCHTE**

(71) Anmelder: Siteco GmbH, 83301 Traunreut (DE)
(72) Erfinder: Wimmer, Kilian, 83362 Surberg (DE); Wuppinger, Bernhard, 83362 Surberg (DE)
(74) Vertreter: Schmidt, Steffen

(57) **Zusammenfassung**

Die Erfindung betrifft eine Außenleuchte mit wenigstens einem Gehäuse, das einen abgedichteten Innenraum festlegt, sowie eine mit der Außenleuchte elektrisch verbundene Auswerteeinheit, wobei die Leuchte wenigstens einen Drucksensor und einen Temperatursensor aufweist, welche dafür eingerichtet sind, den Druck und die Temperatur in dem Innenraum der Leuchte zu messen und die Messdaten an die Auswerteeinheit weiterzuleiten, wobei die Auswerteeinheit dazu eingerichtet ist, eine Undichtigkeit des Gehäuses festzustellen, wenn bei einer steigenden oder fallenden Temperatur innerhalb eines vorgegebenen Zeitraums, der zwischen 1 Minute und 180 Minuten beträgt, eine Druckänderung von weniger als ±0,2%/K detektiert wird, und eine Information über die festgestellte Undichtigkeit auszugeben.

## Beschreibung

Die vorliegende Erfindung bezieht sich auf eine Außenleuchte mit einem abgedichteten Gehäuse und insbesondere auf eine Einrichtung, um eine Undichtigkeit im Gehäuse der Leuchte zu detektieren.

Auf dem Gebiet der Außenbeleuchtung ist es üblich, dass Leuchten in verschiedenen Umgebungen und unter unterschiedlichen Witterungsbedingungen eingesetzt werden. Bekannte Systeme umfassen typischerweise Gehäuse, die den Innenraum der Leuchte vor äußeren Einflüssen wie Feuchtigkeit und Staub schützen sollen. Diese Gehäuse sind oft mit Dichtungen und anderen Schutzmechanismen ausgestattet, um die Integrität des Innenraums zu gewährleisten. Trotz dieser Maßnahmen kann es jedoch im Laufe der Zeit oder bereits unmittelbar bei der Inbetriebnahme der Leuchte zu Undichtigkeiten kommen, die die Funktionalität und Lebensdauer der Leuchte beeinträchtigen können. Solche Undichtigkeiten können durch mechanische Beschädigungen, Materialermüdung oder unsachgemäße Installation verursacht werden.

Gemäß bekannter Technologien werden verschiedene Ansätze zur Überwachung der Dichtheit von Leuchtengehäusen eingesetzt. Dazu gehören visuelle Inspektionen, die jedoch zeitaufwendig und nicht immer zuverlässig sind. Einige Systeme nutzen Drucktests, bei denen der Innenraum der Leuchte unter Druck gesetzt wird, um mögliche Leckagen zu identifizieren. Diese Methoden erfordern jedoch spezielle Ausrüstung und sind oft nicht praktikabel für den regelmäßigen Einsatz im Feld. Andere Ansätze beinhalten den Einsatz von Feuchtigkeitssensoren, die das Eindringen von Wasser in das Gehäuse erkennen sollen. Diese Sensoren können jedoch nur dann Alarm schlagen, wenn bereits Feuchtigkeit eingedrungen ist, was möglicherweise zu spät ist, um Schäden zu verhindern.

Trotz der beträchtlichen Fortschritte auf dem Gebiet der Außenbeleuchtung besteht nach wie vor ein Bedarf an verbesserten Systemen zur Überwachung der Dichtheit von Leuchtengehäusen. Insbesondere gibt es einen Bedarf an Systemen, die kontinuierlich und automatisch arbeiten können, ohne dass eine manuelle Inspektion erforderlich ist. Solche Systeme sollten in der Lage sein, frühzeitig auf potenzielle Undichtigkeiten hinzuweisen, bevor es zu ernsthaften Schäden kommt.

Es ist daher ein der vorliegenden Erfindung zugrunde liegendes technisches Problem, ein System zur Überwachung der Dichtheit von Leuchtengehäusen bereitzustellen, das die Nachteile bekannter Systeme zumindest teilweise überwindet.

Ein Ziel der vorliegenden Erfindung ist daher, eine Außenleuchte bereitzustellen, die mögliche Schädigungen der Leuchte erkennt, bevor es zum Ausfall der Leuchte kommt.

Die Erfindung löst das Problem durch eine Außenleuchte mit einer Auswerteeinheit nach Anspruch 1.

Gemäß einer Besonderheit der Erfindung, umfasst die Außenleuchte ein Gehäuse, das einen abgedichteten Innenraum definiert, sowie eine Auswerteeinheit, die elektrisch mit der Leuchte verbunden ist. Die Leuchte ist mit einem Drucksensor und einem Temperatursensor ausgestattet, die eingerichtet sind, den Druck und die Temperatur im Innenraum der Leuchte zu messen und die Messdaten an die Auswerteeinheit weiterzuleiten. Die Auswerteeinheit ist so konfiguriert, dass sie eine Undichtigkeit des Gehäuses erkennt, wenn bei einer Temperaturänderung innerhalb eines bestimmten Zeitraums eine Druckänderung von weniger als ±0,2% pro Kelvin festgestellt wird. Diese Information über die festgestellte Undichtigkeit wird dann von der Auswerteinheit ausgegeben.

Die technischen Merkmale der Erfindung ermöglichen es, den Zustand der Dichtheit des Gehäuses kontinuierlich zu überwachen. Durch die Messung der Druck- und Temperaturveränderungen im Innenraum der Leuchte kann die Auswerteeinheit feststellen, ob das Gehäuse undicht ist. Eine Undichtigkeit wird erkannt, wenn der Druck im Innenraum nicht entsprechend der Temperaturänderung ansteigt oder abfällt, was auf einen Luftaustausch mit der Umgebung hindeutet. Bei einem abgedichteten Innenraum muss sich der Druck in dem abgeschlossenen Innenraum entsprechend der Temperaturänderung verändern. Unter Normalbedingung ändert sich der Druck in einem geschlossenen Gehäuse mit ungefähr 0,33 %/K Temperaturänderung (das gilt für Werte um etwa 15°C). Die Erfindung macht sich zu Nutze, dass beim Ein- oder Ausschalten der Leuchtmittel sich das Gas im Gehäuse ohnehin erwärmt bzw. abkühlt. Wenn die dadurch hervorgerufene Temperaturänderung jedoch keine Druckänderung im Leuchtengehäuse zur Folge hat oder eine Druckänderung von deutlich weniger als etwa 0,3%/K zur Folge hat, deutet dies auf eine Undichtigkeit des Gehäuses hin. Die Auswerteeinheit vergleicht daher die Temperaturänderung mit der Druckänderung und meldet eine Undichtigkeit des Leuchtengehäuses, wenn der Temperaturänderung keine Druckänderung bzw. eine Druckänderung von weniger als 0,2%/K Temperaturänderung zur Folge hat. Dadurch ist eine frühzeitige Erkennung eines undichten Gehäuses möglich. Dies ist besonders wichtig, da eine Undichtigkeit zu Feuchtigkeitseintritt und damit zu Korrosion und schließlich zum Ausfall der Elektronik führen kann.

Ein Vorteil dieser Konfiguration ist daher die Möglichkeit, frühzeitig auf Undichtigkeiten aufmerksam zu werden und entsprechende Maßnahmen zu ergreifen, bevor es zu einem Totalausfall der Leuchte kommt.

In der Auswerteeinheit werden Temperaturänderungen berücksichtigt, welche sich innerhalb eines vorgegebenen Zeitraums zwischen 1 Minute und 180 Minuten ereignen. Druckänderungen, welche außerhalb dieses vorgegebenen Zeitraums stattfinden, können auch durch andere Effekte hervorgerufen werden, welche das Ergebnis der Auswerteeinheit möglicherweise verfälschen. Insbesondere können erfindungsgemäße Außenleuchten auch mit einer Klimamembran versehen sein, welche dafür eingerichtet ist, einen Gasaustausch zwischen dem Innenraum und der Umgebung zu ermöglichen. Dieser Gasaustausch findet jedoch nur bei einer verhältnismäßig hohen Druckdifferenz (oberhalb von 0,05 bar) oder bei geringeren Druckdifferenzen nur sehr langsam durch einen Diffusionsprozess statt. Da die Auswerteeinheit lediglich Druckänderungen innerhalb von maximal 180 Minuten auswertet, bleibt der durch den Diffusionsprozess erzeugte Druckausgleich bei der Auswertung unberücksichtigt, um dadurch das Ergebnis der Dichtigkeitsprüfung nicht zu verfälschen. Außerdem werden Änderungen innerhalb von weniger als einer Minute nicht berücksichtigt, weil die Temperatur- und Drucksensoren durch ihr verzögertes Ansprecherhalten innerhalb dieser kurzen Zeit keine zuverlässigen Messwerte erzeugen. Beispielsweise kann der vorgegebene Zeitraum 30 Minuten (± 10 Minuten) betragen. Dies entspricht einem typischen Zeitraum, in dem die Temperatur im Innenraum des Gehäuses nach dem Anschalten der Leuchte steil ansteigt.

Nach einer Ausführungsform wird die Außenleuchte und die Auswerteeinheit so konfiguriert, dass Temperaturänderungen von weniger als ±2K und mehr als ±15K innerhalb des vorbestimmten Zeitraums zwischen 1 Minute und 180 Minuten, z.B. innerhalb von 30 Minuten, von der Auswerteeinheit nicht zur Feststellung einer Undichtigkeit ausgewertet werden. Diese spezifische Beschränkung der Temperaturänderungen hat den technischen Effekt, dass die Auswerteeinheit nur Druckänderungen berücksichtigt, die innerhalb eines Bereichs liegen, der für die Dichtigkeit des Gehäuses aussagekräftig ist. Temperaturänderungen von weniger als ±2K können zu geringen Druckänderungen führen, die möglicherweise durch externe Faktoren oder Messungenauigkeiten verursacht werden und daher nicht zuverlässig auf eine Undichtigkeit hinweisen. Auf der anderen Seite können Temperaturänderungen von mehr als ±15K zu erheblichen Druckunterschieden von mehr als 0,05 bar führen, die einen Gasstrom durch die Klimamembran auslösen. Dieser Gasstrom kann den Druck im Innenraum der Leuchte ausgleichen und somit eine tatsächliche Undichtigkeit maskieren. Durch die Beschränkung der ausgewerteten Temperaturänderungen auf den Bereich zwischen ±2K und ±15K wird sichergestellt, dass die Auswerteeinheit nur solche Druckänderungen analysiert, die direkt auf eine mögliche Undichtigkeit des Gehäuses hinweisen, ohne durch externe Einflüsse oder die Funktion der Klimamembran verfälscht zu werden. Dies erhöht die Zuverlässigkeit und Genauigkeit der Leckagedetektion und trägt dazu bei, die Lebensdauer und Funktionsfähigkeit der Außenleuchte zu gewährleisten.

Nach einer Ausführungsform umfasst die Außenleuchte ein Gehäuse mit einer Klimamembran, die so konzipiert ist, dass sie einen Gasstrom zwischen dem Innenraum des Gehäuses und der Umgebung ermöglicht, sobald eine vorgegebene Druckdifferenz erreicht wird, wobei diese Druckdifferenz vorzugsweise 0,05 bar beträgt. Die Auswerteeinheit ist in der Lage, eine Druckänderung zu erkennen, die diese vorgegebene Druckdifferenz überschreitet, und gibt eine Information über eine mögliche Verstopfung der Klimamembran aus. Die Klimamembran dient dazu, Druckunterschiede auszugleichen und somit die strukturelle Integrität der Leuchte zu gewährleisten, indem sie verhindert, dass Feuchtigkeit in den Innenraum eindringt. Dies ist besonders wichtig, da eine Verstopfung der Membran den erwünschten Gasstrom durch die Membran behindern und zu einer Ansammlung von Feuchtigkeit führen könnte, was letztlich die Elektronik der Leuchte beschädigen könnte. Die Fähigkeit der Auswerteeinheit, eine Verstopfung der Membran zu erkennen und zu melden, bietet den Vorteil, dass Wartungsarbeiten rechtzeitig durchgeführt werden können, um die Lebensdauer der Leuchte zu verlängern und Ausfälle zu vermeiden.

Nach einer Ausführungsform umfasst die Leuchte einen zusätzlichen Feuchtigkeitssensor, der die relative Feuchtigkeit im Innenraum des Gehäuses misst und die Messdaten an die Auswerteeinheit übermittelt. Die Auswerteeinheit ist so konfiguriert, dass sie eine Information über einen Feuchtigkeitseintritt in die Leuchte ausgibt, wenn die relative Feuchtigkeit im Innenraum des Gehäuses über einen Zeitraum von mehr als fünf Stunden 80% überschreitet. Der Feuchtigkeitssensor stellt sicher, dass ein Feuchtigkeitseintritt, der trotz der automatisierten Dichtigkeitsmessung durch den Druck- und Temperatursensor nicht erkannt wird, dennoch durch den Anstieg der Feuchtigkeit im Innenraum detektiert direkt wird. Durch die Integration des Feuchtigkeitssensors wird die Überwachung der Leuchte daher umfassender und zuverlässiger, da nicht nur mögliche Leckagen, sondern auch Feuchtigkeitswerte kontinuierlich überwacht werden. Dies ermöglicht eine ergänzende Erkennung von Problemen, die durch Feuchtigkeitseintritt verursacht werden, und bietet somit einen zusätzlichen Schutz für die Elektronik der Leuchte.

Nach einer Ausführungsform ist die Auswerteeinheit mechanisch in oder an der Außenleichte befestigt und weist eine Kommunikationsschnittstelle, vorzugsweise eine DALI-Schnittstelle (Digital Addressable Lighting Interface), auf. Diese Schnittstelle ermöglicht die Übertragung der von der Auswerteeinheit ermittelten Informationen über den Zustand der Leuchte, insbesondere über mögliche Undichtigkeiten, an externe Systeme. Die mechanische Befestigung der Auswerteeinheit in oder an der Leuchte stellt sicher, dass die Datenauswertung und -übertragung stabil und zuverlässig erfolgt. Die Verwendung einer DALI-Schnittstelle bietet den Vorteil der Kompatibilität mit bestehenden Beleuchtungssteuerungssystemen, um eine einfache Integration und zentrale Überwachung zu ermöglichen. Dies führt zu einer verbesserten Wartungseffizienz, da potenzielle Probleme frühzeitig erkannt und behoben werden können, bevor es zu einem Totalausfall der Leuchte kommt. Zudem ermöglicht die Schnittstelle eine kontinuierliche Überwachung der Betriebsbedingungen der Leuchte, was zur Verlängerung der Lebensdauer und zur Reduzierung von Wartungskosten beiträgt.

Nach einer alternativen Ausführungsform ist die Auswerteeinheit separat von der Außenleuchte angeordnet, wobei die Messdaten der Sensoren über eine Kommunikationsschnittstelle, insbesondere eine DALI-Schnittstelle, von der Leuchte an die Auswerteeinheit übertragen werden. Diese Konfiguration bietet auch Vorteile. Erstens ermöglicht die separate Anordnung der Auswerteeinheit eine flexiblere Platzierung und erleichtert den Zugang zur Auswerteeinheit für Wartungs- und Diagnosezwecke, ohne die Leuchte selbst öffnen zu müssen. Ferner ermöglicht diese Ausführungsform eine zentrale Überwachung und Verwaltung mehrerer Leuchten von einer einzigen Auswerteeinheit aus, was die Effizienz und Effektivität des Wartungsmanagements erheblich steigern kann und die Kosten der Außenleuten senkt.

Nach einer Ausführungsform ist die Auswerteeinheit in der Lage, bei einer Druckänderung von mehr als 0,006 bar innerhalb einer Minute oder bei einer Temperaturänderung von mehr als ±2K innerhalb derselben Zeitspanne eine Information über ein Extremwetterereignis auszugeben. Diese spezifischen Kommunikationsmechanismen zwischen der Außenleuchte und der Auswerteeinheit ermöglicht zusätzlich zu der Dichtigkeitsüberwachung eine Überwachung der Umgebungsbedingungen und bieten weitere Vorteile. Die Detektion einer schnellen Temperaturänderung, welche ohne das Ein- oder Ausschalten der Leuchtmittel auftritt, kann auf ein plötzliches Wetterphänomen hinweisen, so dass die Auswerteeinheit auch eine Information über das Extremwetterereignis ausgegeben kann. Diese Funktionalität ermöglicht es, die Leuchte auf bevorstehende Wetteränderungen vorzubereiten und gegebenenfalls Anpassungen vorzunehmen., um die Beleuchtungssituation zu optimieren. Ein Vorteil ist die Möglichkeit, die Beleuchtungssituation dynamisch an die aktuellen Wetterbedingungen wie z.B. Starkregen anzupassen, was insbesondere in Bereichen wie der Straßenbeleuchtung von großer Bedeutung sein kann. Dies trägt nicht nur zur Sicherheit im Straßenverkehr bei, sondern kann auch die Energieeffizienz der Beleuchtungssysteme verbessern.

Nach einer Ausführungsform sind in dem Innenraum des Gehäuses die Leuchtmittel, insbesondere LEDs, der Außenleuchte angeordnet. Diese Leuchtmittel sind wesentliche Komponenten der Außenleuchte und tragen zur Beleuchtungsfunktion bei. Platzierung der Leuchtmittel im abgedichteten Innenraum schützt sie vor äußeren Einflüssen wie Feuchtigkeit, Staub und chemischen Substanzen, die in Außenumgebungen häufig vorkommen. Dies trägt zur Zuverlässigkeit und Langlebigkeit der Leuchte bei. Die Kombination aus Druck- und Temperatursensoren mit den Leuchtmitteln in selben Gehäuseinnenraum ermöglicht eine präzise Überwachung der Betriebsbedingungen der Leuchtmittel. Bei einer festgestellten Undichtigkeit kann die Auswerteeinheit rechtzeitig eine Warnung ausgeben, bevor es zu einem Ausfall der Leuchtmittel kommt.

Nach einer Ausführungsform ist in dem Innenraum der Außenleuchte mindestens ein elektronisches Vorschaltgerät angeordnet. Das elektronische Vorschaltgerät, auch EVG genannt, ist eine Komponente, die zur Steuerung und Regelung der elektrischen Versorgung der Leuchtmittel dient. Durch die Integration des EVG in den Innenraum der Leuchte wird eine kompakte Bauweise ermöglicht, die den Schutz der elektronischen Komponenten vor äußeren Einflüssen wie Feuchtigkeit und Staub verbessert. Zudem kann das EVG durch die kontinuierliche Überwachung der Druck- und Temperaturverhältnisse im Innenraum der Leuchte besser vor möglichen Schäden durch Undichtigkeiten geschützt werden. Die Auswerteeinheit kann somit nicht nur Undichtigkeiten erkennen, welche die Funktionsfähigkeit der Leuchtmittel beeinträchtigen, sondern auch die unmittelbare Umgebung des EVG überwachen und bei Bedarf entsprechende Wartungsmaßnahmen einleiten. Dies erhöht die Lebensdauer und Zuverlässigkeit der Außenleuchte, da das EVG eine zentrale Rolle in der Funktionalität der Leuchte spielt

Nach einer Ausführungsform umfasst die Außenleuchte ein elektronisches Vorschaltgerät und Leuchtmittel, die beide im gleichen Innenraum angeordnet sind. Diese Anordnung ermöglicht eine kompakte Bauweise der Leuchte, wodurch die Installation und Wartung vereinfacht wird. Zudem wird durch die gemeinsame Unterbringung im gleichen Innenraum die Anzahl der potenziellen Durchführungen und Dichtstellen reduziert, was das Risiko von Undichtigkeiten verringert. Die Integration des elektronischen Vorschaltgeräts und der Leuchtmittel in einem abgedichteten Innenraum trägt dazu bei, die Lebensdauer der elektronischen Komponenten zu verlängern, da sie vor äußeren Einflüssen wie Feuchtigkeit und Staub geschützt sind. Dies ist besonders vorteilhaft in Umgebungen mit hohen Anforderungen an die Dichtigkeit und Langlebigkeit der Leuchten, wie beispielsweise in der Straßenbeleuchtung oder in industriellen Anwendungen. Die gemeinsame Anordnung ermöglicht zudem eine effizientere Wärmeableitung, da die Wärmeentwicklung der Leuchtmittel und des Vorschaltgeräts zentral gemanagt werden kann, was zu einer verbesserten thermischen Stabilität und einer längeren Lebensdauer der gesamten Leuchte führt.

Nach einer alternativen Ausführungsform umfasst die Außenleuchte ein elektronisches Vorschaltgerät und Leuchtmittel, die in zwei unterschiedlichen Innenräumen angeordnet sind, wobei jeder der beiden Innenräume mit einem eigenen Drucksensor und Temperatursensor überwacht wird. Diese Sensoren sind dafür eingerichtet, den Druck und die Temperatur in den jeweiligen Innenräumen zu messen und die Daten an die Auswerteeinheit weiterzuleiten. Die Auswerteeinheit ist so konfiguriert, dass sie eine Undichtigkeit des Gehäuses für die beiden Innenräume separat feststellen kann. Durch die getrennte Überwachung der Innenräume können potenzielle Undichtigkeiten präziser lokalisiert werden. Dadurch wird die Möglichkeit geschaffen, spezifische Probleme in den unterschiedlichen Innenräumen unabhängig voneinander zu diagnostizieren, was die Effizienz der Instandhaltungsmaßnahmen weiter verbessert.

Weitere Merkmale und Vorteile der vorliegenden Erfindung werden aus der nachfolgenden Beschreibung einer bevorzugten Ausführungsform, welche in Verbindung mit der Figur beschrieben wird, deutlich.

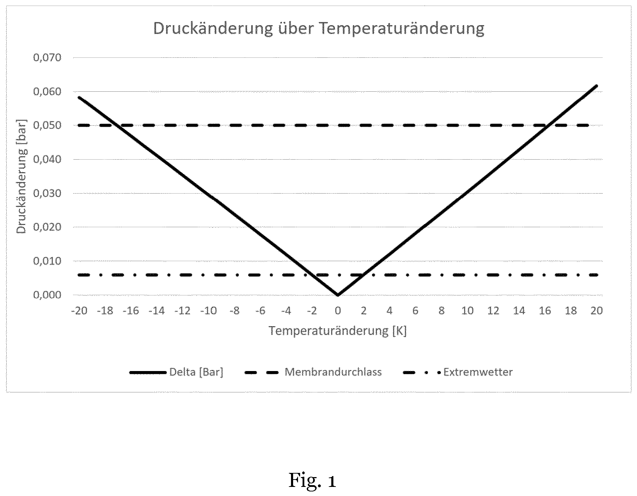

- Figur 1: zeigt ein Diagramm der Druckänderung über die Temperaturänderung in einem abgedichteten Gehäuseinnenraum einer Leuchte nach einer Ausführungsform der Erfindung.

Die Erfindung betrifft eine Außenleuchte mit einem Gehäuse, das einen abgedichteten Innenraum festlegt, sowie eine mit der Außenleuchte elektrisch verbundene Auswerteeinheit. Die Leuchte weist mindestens einen Drucksensor und einen Temperatursensor auf, die dafür eingerichtet sind, den Druck und die Temperatur im Innenraum der Leuchte zu messen und die Messdaten an die Auswerteeinheit weiterzuleiten. Die Auswerteeinheit ist dazu eingerichtet, eine Undichtigkeit des Gehäuses festzustellen, wenn bei einer steigenden oder fallenden Temperatur innerhalb einer bestimmten Zeitspanne eine Druckänderung von weniger als ±0,2%/K detektiert wird, und eine Information über die festgestellte Undichtigkeit auszugeben.

Die Druckänderung über die Temperatur spielt eine zentrale Rolle bei der Ermittlung einer Gehäuseundichtigkeit. Wenn die Leuchte eingeschaltet wird, kommt es zu einer Erwärmung des Innenraums, was zu einem Anstieg des Drucks führt. Solange die Leuchte dicht ist, besteht ein fester Zusammenhang zwischen Temperatur und Druck, wobei der Druck pro Kelvin um etwa 0,3% steigt. Diese Regel gilt für einen Temperaturbereich um etwa 15°C, d.h. einer typischen Umgebungstemperatur einer Außenleuchte. Wenn jedoch trotz einer ansteigenden Temperatur, insbesondere ausgelöst durch das Anschalten der Leuchtmittel in der Leuchte, der Druck im Gehäuseinnenraum unverändert bleibt oder deutlich unter den erwarteten 0,3%/K ansteigt, kann von einer Undichtigkeit des Gehäuses ausgegangen werden.

Abbildung 1 zeigt die Beziehung zwischen Druckänderung und Temperaturänderung. Die durchgezogene Linie stellt die Druckänderung in bar gegenüber einer Temperaturänderung in Kelvin (K) dar.

Die gestrichelte Linie zeigt den Druckunterschied von 0,05 bar an. Ab diesem Druckunterschied erfolgt in der Regel ein Luftstrom durch eine Klimamembran, welche den Gehäuseinnenraum von der Umgebung abtrennt. Beispielsweise kann die Klimamembran das Produkt Schreiner ProTech DAE_DC_DF_1_S10.1 umfassen. Bei einem Druckunterschied zwischen dem Gehäuseinnenraum und der Umgebung von über 0,05 bar erfolgt daher bereits ein relativ schneller Druckausgleich durch den Luftstrom durch die Klimamembran. Dieser Bereich der Messung wird daher für die Auswerteeinheit zum Bestimmen einer Undichtigkeit nicht berücksichtigt. Ferner bleiben auch Druckänderungen in dem Leuchtengehäuse durch eine Luftdiffusion durch die Klimamembran, welche selbst bei geringeren Druckunterschieden aber lediglich über einen Zeitraum von Stunden oder Tagen auftreten, bei der Auswertung in der Auswerteeinheit für die Undichtigkeitsprüfung unberücksichtigt, da lediglich Temperatur- und Druckänderungen über den vorgegebenen Zeitraum zwischen 1 Minute und 180 Minuten ausgewertet werden.

Die gepunktete Linie repräsentiert die Druckänderung aufgrund von Extremwetterereignissen, welche auch innerhalb von kürzester Zeit auftreten können. Demgegenüber sind Druckänderungen, welche durch das Ein- oder Ausschalten der Leuchtmittel und der sich daran anschließenden Erwärmung bzw. Abkühlung der Temperatur im Innenraum des Gehäuses einstellen, wesentlich größer. Daher bleiben auch die Temperaturänderungen unterhalb von ±2K bei der Auswertung zur Bestimmung der Gehäuseundichtigkeit unberücksichtigt.

Die Abbildung veranschaulicht das Funktionsprinzip der Auswerteeinheit. Bei einem geschlossenen Gasvolumen ändert sich der Druck linear mit der Temperatur. Wenn die Druckänderung deutlich unterhalb 0,3%/K, z.B. bei 0,2%/K, 0,1%/K oder unverändert bleibt, ist dies ein deutliches Anzeichen dafür, dass eine Leckage in dem Gehäuse, welches den Innenraum umschließt, vorhanden ist.

Wenn demgegenüber eine Druckänderung von über 0,5 bar gemessen wird bei einer Ausführungsform in einer Leuchte mit Klimamembran, ohne dass unmittelbar darauf ein Druckausgleich festgestellt wird, kann man davon ausgehen, dass die Klimamembran verstopft ist. Die Auswerteeinheit kann diese Ergebnisse entsprechend ausgeben. Ferner kann die Auswerteeinheit auch dafür eingerichtet sein, Temperaturänderungen von weniger als ±2K anzuzeigen, um so auf Wetterereignisse schließen zu können.

Zusammenfassend lässt sich sagen, dass die Druckänderung über die Temperatur ein zuverlässiger Indikator für die Integrität des Gehäuses der Außenleuchte ist. Durch die kontinuierliche Überwachung der Druck- und Temperaturwerte kann die Auswerteeinheit frühzeitig auf Undichtigkeiten hinweisen und somit Schäden durch Feuchtigkeitseintritt und Korrosion verhindern.

## Patentansprüche

1. Außenleuchte mit wenigstens einem Gehäuse, das einen abgedichteten Innenraum festlegt, sowie eine mit der Außenleuchte elektrisch verbundene Auswerteeinheit,
wobei die Leuchte wenigstens einen Drucksensor und einen Temperatursensor aufweist, welche dafür eingerichtet sind, den Druck und die Temperatur in dem Innenraum der Leuchte zu messen und die Messdaten an die Auswerteeinheit weiterzuleiten,
wobei die Auswerteeinheit dazu eingerichtet ist, eine Undichtigkeit des Gehäuses festzustellen, wenn bei einer steigenden oder fallenden Temperatur innerhalb eines vorgegebenen Zeitraums, der zwischen 1 Minute und 180 Minuten beträgt, eine Druckänderung von weniger als ±0,2%/K detektiert wird, und eine Information über die festgestellte Undichtigkeit auszugeben.

2. Außenleuchte und Auswerteeinheit nach Anspruch 1, wobei eine Temperaturänderung von weniger als ±2K und/oder mehr als ±15K innerhalb des vorgegebenen Zeitraums von der Auswerteeinheit nicht verwendet wird, um eine Undichtigkeit festzustellen.

3. Außenleuchte und Auswerteeinheit nach einem der vorhergehenden Ansprüche, wobei das Gehäuse eine Klimamembran aufweist, welche eingerichtet ist, um einen Gasstrom zwischen dem Innenraum des Gehäuses und der Umgebung ab Erreichen einer vorgegebenen Druckdifferenz zwischen dem Innenraum und der Umgebung zu ermöglichen, wobei die vorgegebene Druckdifferenz insbesondere 0,05 bar ist, und wobei die Auswerteeinheit dazu eingerichtet ist, bei Feststellen einer Druckänderung von mehr als der vorgegebenen Druckdifferenz eine Information über eine Verstopfung der Membran auszugeben.

4. Außenleuchte mit Auswerteeinheit nach einem der vorhergehenden Ansprüche, wobei die Leuchte ferner einen Feuchtigkeitssensor aufweist, welcher dazu eingerichtet ist, die Feuchte im Innenraum des Gehäuses zu messen und die Messdaten an die Auswerteeinheit zu übertragen, wobei die Auswerteeinheit dazu eingerichtet ist, beim Überschreiten einer relativen Feuchte von 80% über mehr als 5 Stunden eine Information über einen Feuchtigkeitseintritt in die Leuchte auszugeben.

5. Außenleuchte und Auswerteeinheit nach einem der vorhergehenden Ansprüche, wobei die Auswerteeinheit mechanisch in oder an der Leuchte befestigt ist und die Auswerteeinheit eine Kommunikationsschnittstelle umfasst, insbesondere eine DALI-Schnittstelle, und dazu eingerichtet ist, die Informationen der Auswerteeinheit über die Schnittstelle zu kommunizieren.

6. Außenleuchte und Auswerteeinheit nach einem der Ansprüche 1 bis 4, wobei die Auswerteeinheit separat von der Leuchte angeordnet ist und die Messdaten der Sensoren der Leuchte über eine Kommunikationsschnittstelle der Leuchte, insbesondere über eine DALI-Schnittstelle, von der Leuchte an die Auswerteeinheit übertragen wird.

7. Außenleuchte und Auswerteeinheit nach einem der vorhergehenden Ansprüche, wobei die Auswerteeinheit dazu eingerichtet ist, bei einer Druckänderung von mehr als 0,006 bar pro Minute oder bei einer Temperaturänderung von mehr als ±2K pro Minute eine Information über ein Extremwetterereignis auszugeben.

8. Außenleuchte und Auswerteeinheit nach einem der vorhergehenden Ansprüche, wobei in dem Innenraum Leuchtmittel, insbesondere LEDs, angeordnet sind.

9. Außenleuchte und Auswerteeinheit nach einem der vorhergehenden Ansprüche, wobei in dem Innenraum wenigstens ein elektronisches Vorschaltgerät angeordnet ist.

10. Außenleuchte und Auswerteeinheit nach Anspruch 9. mit Rückbezug auf Anspruch 8, wobei das elektronische Vorschaltgerät und die Leuchtmittel im gleichen Innenraum angeordnet sind.

11. Außenleuchte und Auswerteeinheit nach Anspruch 9. mit Rückbezug auf Anspruch 8, wobei das elektronische Vorschaltgerät und sie Leuchtmittel in zwei unterschiedlichen Innenräumen angeordnet sind und jeder der beiden Innenräume jeweils einen Drucksensor und einen Temperatursensor aufweist, welche dafür eingerichtet sind, den Druck und die Temperatur in dem betreffenden Innenraum der Leuchte zu messen und die Auswerteeinheit dazu eingerichtet ist, eine Undichtigkeit des Gehäuses für die beiden Innenräume separat festzustellen.
